Europäisches Patentamt

European Patent Office

Office européen des brevets

(19)

(11) Numéro de publication : **0 024 982**
**B1**

(12)

# FASCICULE DE BREVET EUROPÉEN

(45) Date de publication du fascicule du brevet :
**28.11.84**

(51) Int. Cl.³ : **B 62 K 15/00, A 63 B 69/16**

(21) Numéro de dépôt : **80401203.7**

(22) Date de dépôt : **21.08.80**

(54) **Vélo à cadre télescopique adaptable en vélo d'appartement.**

(30) Priorité : **22.08.79 FR 7921147**
**21.02.80 FR 8003816**

(43) Date de publication de la demande :
**11.03.81 Bulletin 81/10**

(45) Mention de la délivrance du brevet :
**28.11.84 Bulletin 84/48**

(84) Etats contractants désignés :
**AT BE DE GB IT NL SE**

(56) Documents cités :
**DE-A- 2 504 628**
**FR-A- 2 321 419**
**US-A- 3 866 908**
**US-A- 4 021 034**
**LE CYCLE, volume 81, juin 1967, no. 8/9 A. BERTIN**
**"La bicyclette pliante" page 8**

(73) Titulaire : **Jouk, Léo**
**14, rue Henri Martin**
**F-93310 Le Pré Saint-Gervais (FR)**

(72) Inventeur : **Jouk, Léo**
**14, rue Henri Martin**
**F-93310 Le Pré Saint-Gervais (FR)**

(74) Mandataire : **Flavenot, Bernard**
**S.E.D.I.C. 21, rue Molière**
**F-92120 Montrouge (FR)**

Jouve, 18, rue St-Denis, 75001 Paris, France

## Description

La présente invention concerne notamment un cadre de bicyclette pour vélo à cadre télescopique, à géométrie variable, adaptable à la morphologie de chaque utilisateur et comptactable pour le transport ou le stockage, pouvant être utilisé, non seulement pour effectuer des trajets sur routes et chemins, mais aussi en vélo d'appartement pour s'entraîner, voire se rééduquer.

On connaît déjà des vélos à cadre télescopique. Ils sont composés d'une base centrale formée d'une poutre constituée d'au moins deux tubes rentrant l'un dans l'autre. Les extrémités de cette poutre portent respectivement à l'avant un manchon pour supporter la roue avant et à l'arrière une fourche dans le prolongement des tubes pour supporter la roue arrière. Une telle structure permet de réaliser un cadre télescopique mais, par contre, il présente l'un ou l'autre des inconvénients suivants.

Si la poutre est d'une longueur suffisante, pour pouvoir réduire au maximum l'encombrement une fois replié, il est nécessaire que la bicyclette possède de très petites roues, qui n'est jamais une caractéristique de confort pour ce genre d'engin.

Par contre, si on désire un confort et donc des roues de grand diamètre, la poutre n'a pas une longueur suffisante pour obtenir une réduction du fait des tubes télescopiques et le résultat recherché n'est pas obtenu.

La présente invention a pour but de réaliser un cadre télescopique obviant ces deux inconvénients et d'obtenir une bicyclette repliable télescopiquement pour réduire considérablement ses dimensions d'encombrement malgré des roues de grand diamètre.

Plus précisément, la présente invention a pour objet un cadre de bicyclette pour vélo à cadre télescopique, comportant une base centrale, des moyens coopérant avec une extrémité de ladite base centrale, pour commander une roue avant, des moyens de fixation d'une roue arrière et des moyens de maintien d'un pédalier et d'une selle sur ladite base (FR-A-2 321 419), caractérisé par le fait que ladite base centrale est constituée par une poutre longitudinale rectiligne décalée par rapport au plan des deux roues, et par des moyens de fixation de ladite route arrière situés latéralement à ladite poutre, sensiblement à sa partie postérieure.

Les tubes formant chaque partie longitudinale sont avantageusement de sections transversales polygonales évitant ainsi toute rotation des tubes l'un par rapport à l'autre. Le vélo à cadre télescopique est également muni d'un bras coudé en forme de L dont l'extrémité libre de son plus grand côté supporte l'extrémité opposée de l'axe de la roue arrière évitant, de cette façon, un porte-à-faux, et permettant un montage de roues standards ; mais, ce vélo peut être conçu avec un axe de roue arrière monté en porte-à-faux fixé à la patte d'ancrage de la poutre télescopique. De plus, ce bras est soudé, d'une part, par l'extrémité libre de son petit côté au premier tube, et, d'autre part, au tube central par une face de ce petit côté. Le vélo est doté d'un système de blocage situé sur la partie antérieure du premier tube pour immobiliser les deux tubes dans une position relative convenant à l'utilisateur, et est muni d'une butée empêchant la sortie de la partie postérieure du second tube de la partie antérieure du premier tube.

Dans une forme préférée de réalisation du vélo, le moyeu de la roue arrière est muni d'un système de freinage par rétro pédalage, supprimant ainsi le passage d'un câble de frein existant sur les vélos pliants actuels, évitant de cette façon, lors du coulissement du premier tube sur le second, un coincement ou un grippage de ce câble.

Toujours selon l'invention, ce vélo à cadre télescopique est adaptable en vélo d'appartement au moyen d'un support présentant au moins deux points d'appui au sol et susceptible d'être solidarisé au premier tube d'au moins une des poutres télescopiques de telle sorte que la roue arrière ne soit plus en contact avec le sol. Le support est constitué d'un longeron coudé s'emmenchant par l'une de ses extrémités à la partie postérieure ouverte du premier tube de la partie télescopique, et dont l'extrémité opposée est solidaire d'un pied transversal d'appui au sol sensiblement perpendiculaire à la roue arrière. De plus, un ensemble constitué d'un galet et d'un volant d'inertie liés en rotation l'un à l'autre est monté sur un élément réglable en position par rapport au support pour modifier à volonté le contact entre le galet et la roue arrière.

Enfin, un tube est fixé sur l'une des faces du longeron du support, muni à l'une de ses extrémités d'une commande de freinage actionnée par l'utilisateur, agissant sur l'ensemble galet et volant d'inertie. L'invention sera mieux comprise à l'aide d'un exemple particulier de réalisation, qui sera à présent décrit, à titre non limitatif, en référence aux figures en annexe dans lesquelles :

la figure 1   représente une vue de côté du vélo à cadre télescopique, en position d'utilisation sur route,

la figure 2   représente une vue de côté du vélo en position cadre télescopique rentré,

la figure 3   représente également une vue de côté du vélo muni de son support adaptable au vélo,

la figure 4   représente une vue de dessus de la figure 3,

la figure 5   représente en perspective le support adaptable au vélo,

la figure 6   représente une vue partielle en perspective de l'arrière du vélo un autre mode de réalisation d'une configuration de vélo d'appartement, tel que monté sur son support,

la figure 7   représente une vue de côté du support du vélo selon la figure 6, et

la figure 8   représente une vue de dessus du support selon la figure 7.

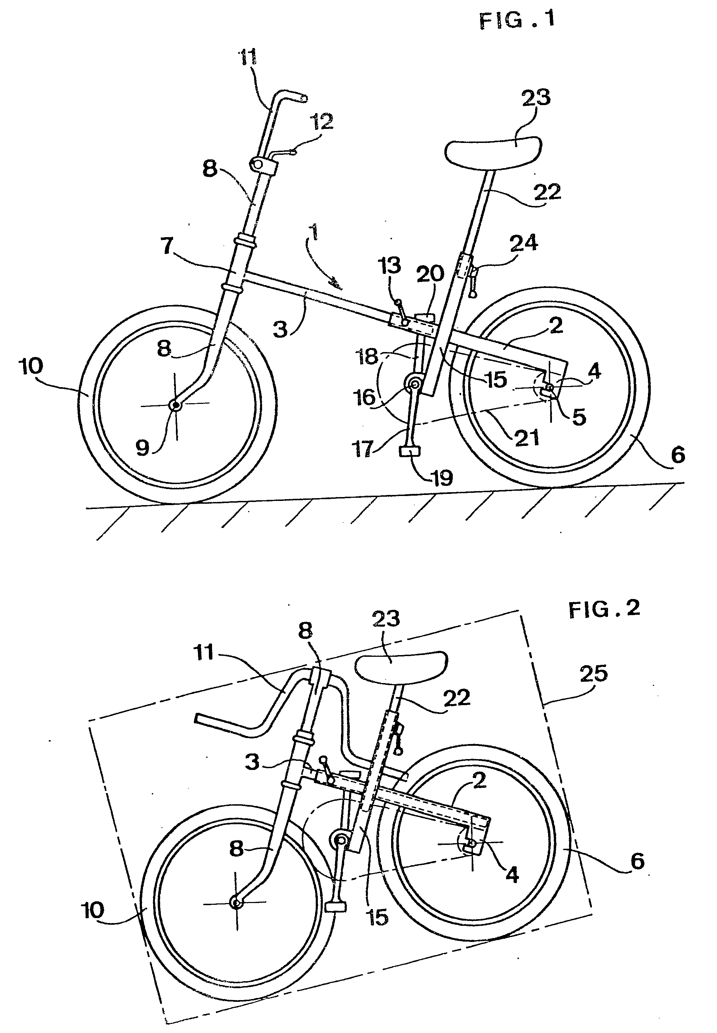

En référence à ces figures 1 à 5, le vélo à cadre télescopique adaptable et transformable en vélo d'appartement comprend une poutre télescopique 1 constituée de deux tubes creux 2 et 3 de sections transversales carrées, évitant ainsi tout risque de rotation de l'un des tubes par rapport à l'autre, dont le premier tube 2 est muni à sa partie postérieure d'une patte d'ancrage 4 destinée à recevoir une des extrémités d'un axe 5 portant une roue arrière 6, et dans lequel coulisse à sa partie antérieure, la partie postérieure du second tube 3 dont la partie antérieure est soudée sur un manchon 7 à l'intérieur duquel pivote une fourche 8, portant à son extrémité inférieure un axe 9 d'une roue avant 10, et muni à son extrémité supérieure d'un guidon 11 et d'une manette de blocage 12 permettant à l'utilisateur, d'une part, d'orienter le guidon 11 en rotation, et d'autre part, de régler la hauteur du tube de fourche 8. Une manette de blocage 13 est également située sur l'une des faces de l'extrémité postérieure du premier tube 2 permettant à l'utilisateur de régler la longueur de la poutre télescopique en fonction de son gabarit, et il est prévu une butée fin de course située à l'intérieur de la poutre 1 limitant et empêchant ainsi la sortie du tube 3 du tube 2 lors d'une manipulation de l'utilisateur. Ces mécanismes de blocage, non représentés sur les figures, hormis leur manette, sont de conception connue en soi, et ne seront donc pas décrits.

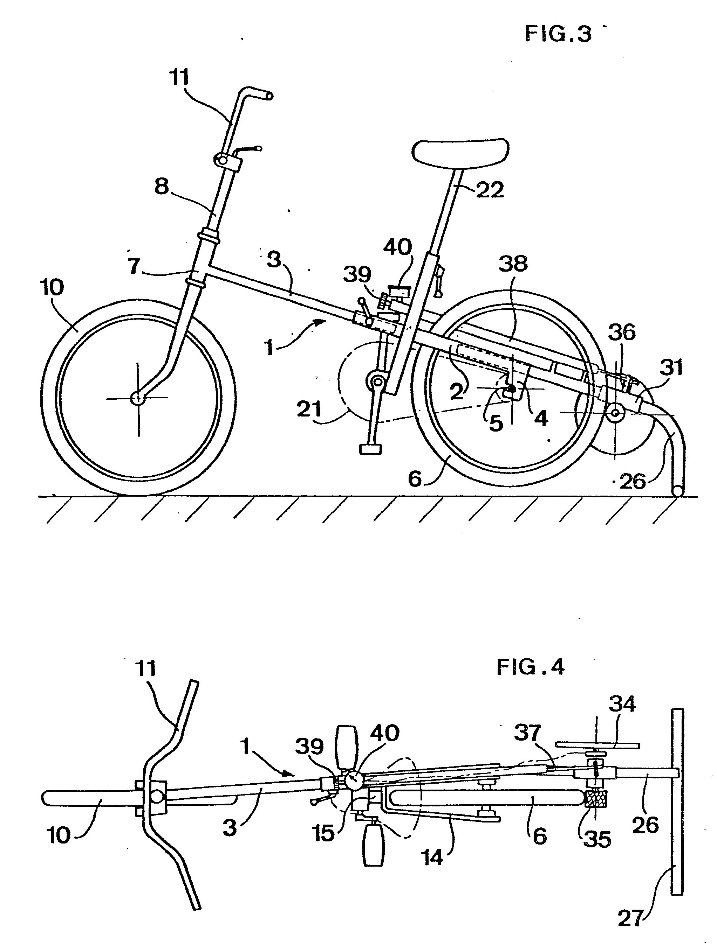

De plus, un bras coudé 14 en forme de L, représenté sur la figure 4, supporte, par l'extrémité libre de son plus grand côté, l'extrémité opposée de l'axe 5 portant la roue arrière 6, éliminant ainsi tout risque de porte-à-faux de l'axe 5 ; ce bras 14 est soudé, d'une part, par l'extrémité libre de son petit côté au premier tube 2 de la poutre télescopique 1, et, d'autre part, par la face externe du petit côté du bras coudé 14 à un tube central 15 creux, de section transversale carrée, au voisinage de l'extrémité inférieure duquel est fixé le mécanisme du pédalier comprenant un axe 16, sur lequel sont montées à ses deux extrémités, deux manivelles 17 et 18, recevant chacune une pédale 19 et 20, ainsi qu'une roue dentée, non représentée sur les figures, munie d'une chaîne 21, représentée en trait mixte fin, transmettant ainsi le mouvement à la roue arrière 6 par l'intermédiaire d'un pignon solidaire de cette roue, situé sous le tube 2 de la poutre télescopique 1, empêchant ainsi la jambe de l'utilisateur de frotter contre la chaîne ; l'extrémité supérieure du tube central 15 recevant l'extrémité inférieure d'un tube 22 coulissant dans le tube 15 et portant à son extrémité supérieure une selle 23 dont l'utilisateur règle la hauteur au moyen d'une manette de blocage 24 fixée au voisinage de l'extrémité supérieure du tube central 15.

Les systèmes de freinage du vélo ne sont pas représentés ; le frein avant étant de conception classique, une poignée fixée au guidon agit sur les mâchoires du frein au moyen d'un câble, par contre, le freinage de la roue arrière est assuré par un système de rétro pédalage situé dans le moyeu de cette roue 6 ; l'utilisateur le faisant fonctionner en appuyant simplement sur les pédales dans le sens inverse.

En utilisant ce type de freinage, on évite ainsi le passage d'un câble le long de la partie télescopique 1 supprimant tout coincement ou grippage d'un câble lors de la rentrée des tubes 2 et 3 l'un dans l'autre. La structure du vélo, telle qu'elle est représentée sur les figures 1 et 3, se compose de la fourche 8 parallèle au tube central 15 ; ces deux éléments étant perpendiculaires à la poutre télescopique 1 constituée de ces deux tubes 2 et 3. Sur la figure 4, la structure du vélo est différente des autres types de vélos existants puisque la poutre télescopique se trouve légèrement décalée de quelques degrés par rapport à l'axe géométrique formé par l'alignement des deux roues.

De plus, avec cette structure, le vélo s'adapte très facilement à n'importe quel gabarit d'utilisateur, en faisant varier simplement la longueur de la partie 1 au moyen de la manette de blocage 13, ce qui entraîne également une variation de la distance entre l'extrémité supérieure du tube 22 à la selle 23 de l'axe 5 de la roue arrière 6 compensant ainsi le fait que l'utilisateur soit de taille grande ou petite. Pour procéder au compactage du vélo, figure 2, l'utilisateur n'a que les trois manettes de blocage 12, 13 et 24 à desserrer, puis il rentre, par exemple, le tube 22 dans le tube central 15, abaissant au maximum la selle 23, et fait ensuite pivoter le guidon 11 de la manière représentée sur la figure 2, et abaisse au maximum le tube de la fourche 8 ; puis fait coulisser le tube 3 dans le tube 2 jusqu'à ce que l'extrémité postérieure du tube 2 soit au voisinage du manchon 7. Ces diverses manœuvres peuvent s'effectuer lorsque les roues du vélo sont en contact avec le sol ; le vélo présentant dans cette position un encombrement minimal et peut se mettre ainsi dans un sac ou une sacoche 25 représenté en trait mixte fin sur la figure 2, ayant pour dimensions approximatives 1 m × 0,60 m, assurant ainsi une protection efficace du vélo ainsi que des endroits où il est rangé ou stocké, tels que coffre de voiture, hangar, ....., de même qu'un transport aisé.

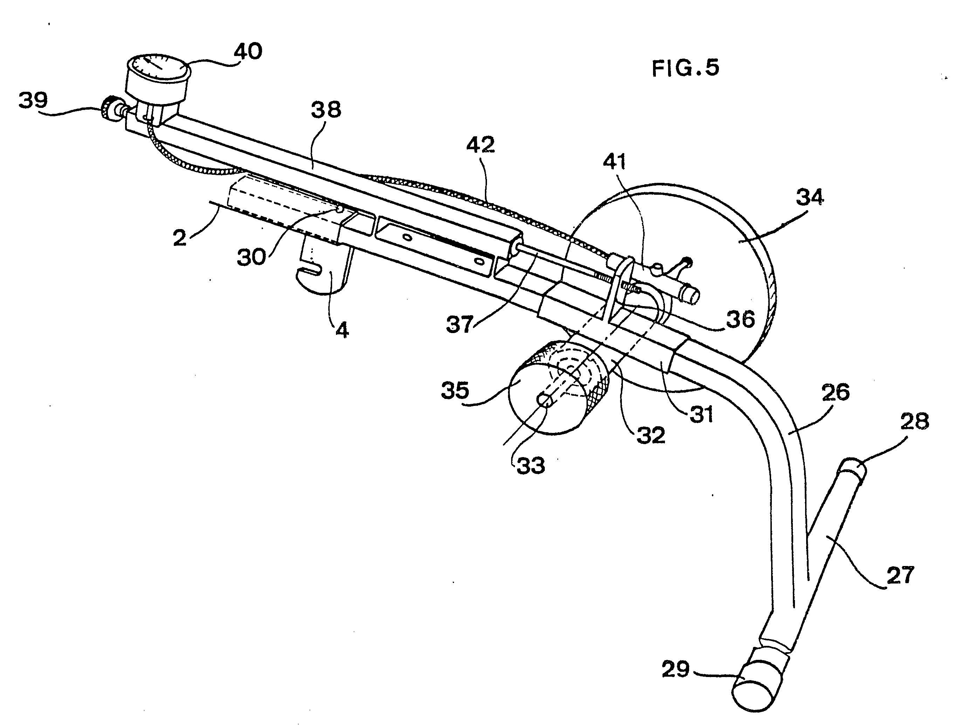

Les figures 3, 4 et 5 représentent le vélo muni de son support ; dans ce cas là, le vélo est utilisable en appartement de manière à ce que l'utilisateur puisse s'entraîner ou parfaire sa condition physique par l'adjonction d'un simple support dans le cadre du vélo. Ce support est constitué, figure 5, d'un longeron coudé 26, solidaire par l'une de ses extrémités d'un pied transversal 27, situé perpendiculairement à la roue arrière 6 du vélo, et muni à ses extrémités respectives d'un bouchon 28 et 29, en caoutchouc par exemple, assurant un bon contact avec le sol, l'extrémité libre du longeron 26 étant introduite par l'utilisateur dans l'extrémité postérieure du tube 2 de la poutre télescopique 1 jusqu'à ce qu'un téton de verrouillage à ressort 30, positionné sur une des faces externes du longeron 26, vienne s'introduire dans un trou de passage prévu sur la face correspondante du tube 2 ; ce téton 30 empêchant ainsi la translation du support par rapport au tube 2, la rotation entre ces deux pièces étant rendue impossible par l'utilisation de tubes à sections carrées. Dans cette position, la roue arrière 6 n'est plus en contact avec le sol (figure 3).

De plus, un fourreau 31, de section carrée également, est monté coulissant autour du longeron coudé 26 et porte sur sa face externe tournée vers le sol un boîtier de pédalier 32 dont l'axe 33 est muni, à ses extrémités respectives, d'un volant d'inertie 34, et d'un galet de freinage 35 dont la surface périphérique se plaque contre le pneu arrière de la roue 6 ; sur la face opposée du fourreau 31 est soudée transversalement une plaque 36 percée d'un trou taraudé recevant une tige 37, filetée à son extrémité correspondante avec le trou, montée à l'intérieur d'un tube support 38 de compteur disposé parallèlement au longeron 26 et solidaire de ce dernier par des moyens de fixation tels que des vis par exemple, et l'extrémité opposée de la tige 37 est munie d'une commande de freinage 39 constituée sous la forme d'un bouton moleté.

De plus, un compteur de vitesse 40 avec totaliseur kilométrique, est placé au voisinage de l'extrémité antérieure du tube support 38 et disposé de façon à ce que l'utilisateur soit en regard avec le compteur 40, lequel est relié à une prise de compteur 41, situé sur le boîtier de pédalier 32, au moyen d'un flexible de transmission 42.

Après avoir introduit l'extrémité du longeron 26 dans le tube 2 par simple coulissement et enclanché le téton de verrouillage 30, l'utilisateur règle la pression de contact entre le galet de freinage 35 et le pneu de la roue arrière 6 en tournant plus ou moins la commande de freinage 39 entraînant par l'extrémité filetée de la tige 37, l'ensemble constitué de la plaque 36, du fourreau 31 et du boîtier de pédalier 32 sur lequel est fixé le galet de freinage 35 ; il peut régler ainsi son effort de pédalage en fonction du type d'entraînement qu'il veut effectuer en modulant donc la commande de freinage 39.

Pour retirer le support du vélo, il suffit à l'utilisateur d'appuyer sur le téton de verrouillage 30 et de tirer, en même temps, en arrière le longeron 26 de manière à désaccoupler le téton 30 du tube 2 ; le vélo est donc dès maintenant disponible pour une utilisation sur route.

Il est également prévu de monter un porte-bagages, non représenté sur les figures, sur la roue arrière, permettant ainsi à l'utilisateur de transporter certaines affaires.

Ce type de vélo, selon l'invention, est donc utilisable et adaptable par n'importe quel gabarit de personne, par simple allongement ou raccourcissement de la poutre télescopique, et est, de plus, transformable en vélo d'appartement par adjonction du support monté directement sur la poutre de façon à ce que les utilisateurs puissent s'entraîner ou parfaire leur condition physique ; de plus, dans ce mode de fonctionnement, ce vélo est utilisable par des personnes handicapés, permettant ainsi la rééducation de leurs membres inférieurs.

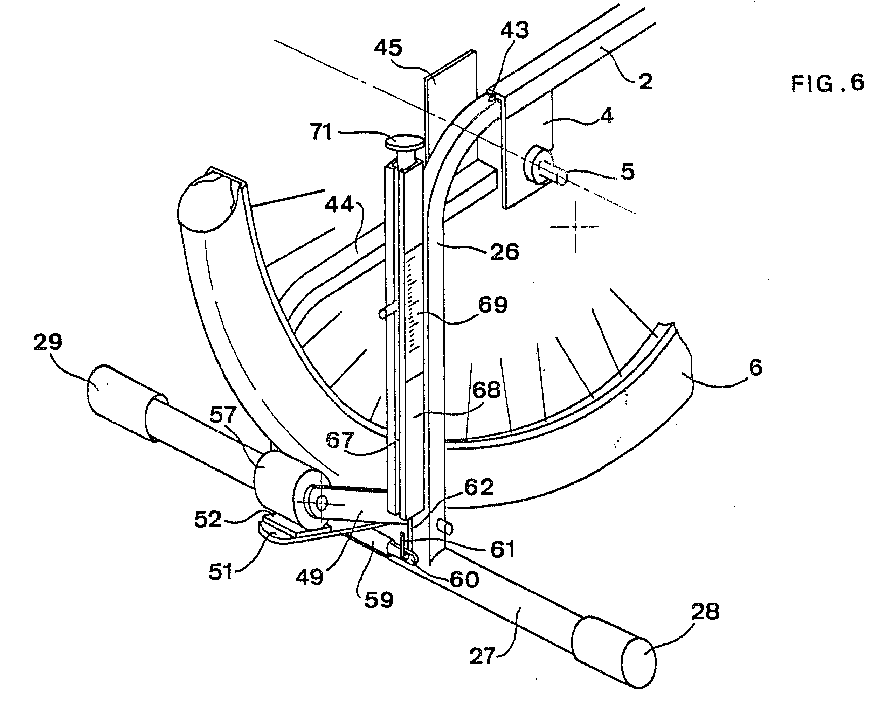

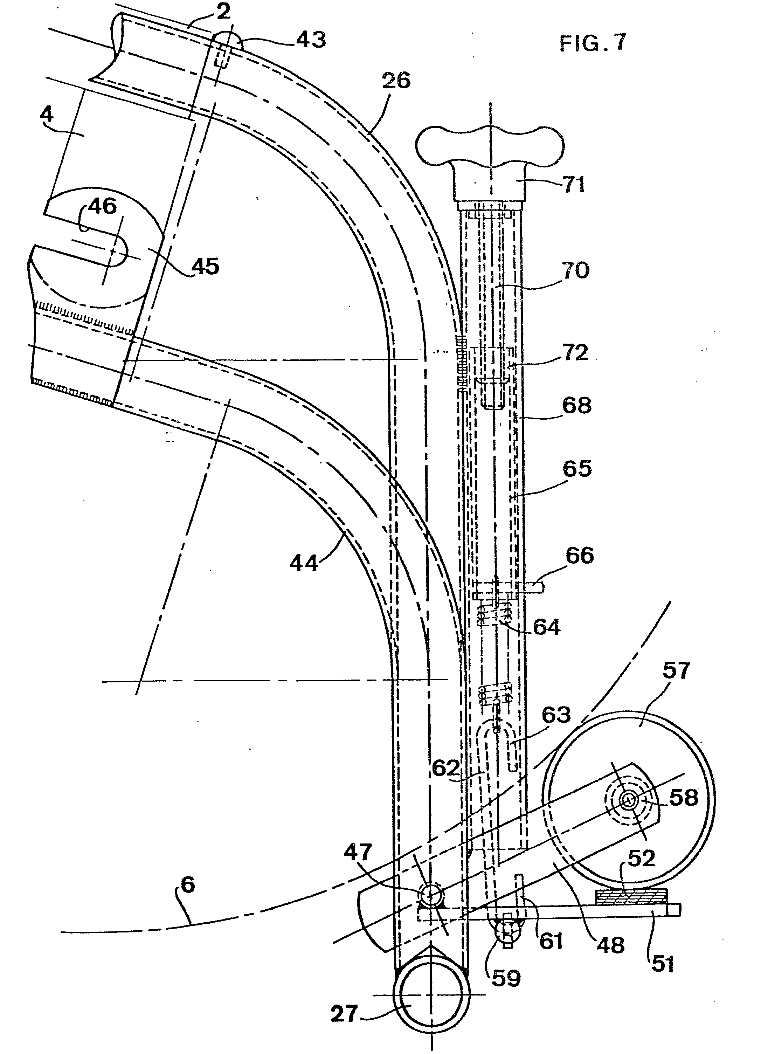

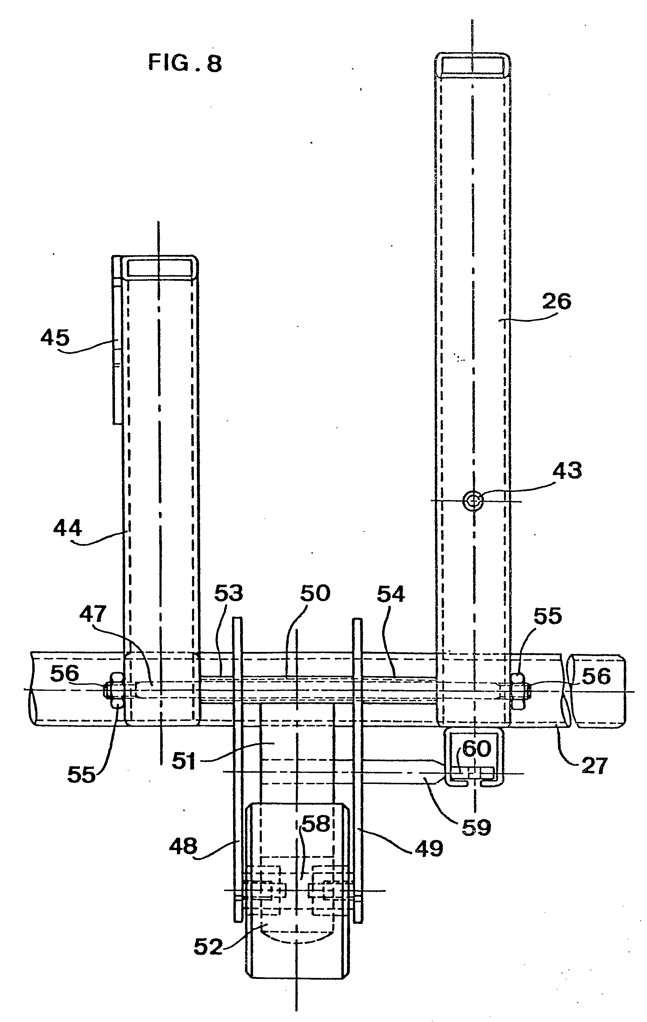

En référence maintenant aux figures 6 à 8, le support du vélo comprend, un longeron coudé 26, solidaire par l'une de ses extrémités d'un pied transversal 27 (par exemple par soudure), le pied 27 étant disposé perpendiculairement au plan de la roue arrière 6 d'un vélo identique à celui décrit en référence aux figures 1 et 2, et muni, à ses extrémités respectives d'un bouchon en caoutchouc 28 et 29, assurant un contact anti-dérapant avec le sol.

L'autre extrémité, qui est libre, du longeron coudé 26 est emmanchée dans l'extrémité postérieure du tube 2 de la poutre longitudinale télescopique du vélo, jusqu'à ce qu'une butée 43 portée par le longeron 26, vienne au contact du tube 2.

Toute rotation relative du longeron 26 et du tube 2 est rendue impossible par l'utilisation d'éléments tubulaires à section transversale carrée.

Dans la position représentée sur les figures 1 et 2, la roue arrière 6 du vélo, dont l'axe 5 est retenu, par l'une de ses extrémités, dans la patte d'ancrage 4 de la partie postérieure du tube 2, n'est plus en contact avec le sol. Afin de procurer une meilleure stabilité du vélo, le support comprend un second longeron coudé 44, également solidarisé par l'une de ses extrémités au pied transversal 27, et s'étendant dans un plan parallèle à celui dans lequel se trouve disposé le longeron coudé 26.

A son extrémité opposée, qui est libre, le second longeron 44 présente une patte d'ancrage 45, munie d'une encoche 46, pour recevoir l'autre extrémité de l'axe 5 de la roue arrière 6, la patte d'ancrage 45 venant se placer à l'extérieur du bras coudé en forme de L, pour supporter, par l'extrémité libre de son plus grand côté, cette extrémité opposé de l'axe 5, et qui se trouve soudé, d'une part, par l'extrémité libre de son petit côté au tube 2 de la poutre télescopique, et, d'autre part, par la face externe de son petit côté, au tube central creux portant le pédalier.

Sur un arbre 47, traversant des perçages pratiqués dans l'alignement l'une de l'autre au travers des longerons 26 et 44, de sorte que leur axe commun soit parallèle à l'axe du pied transversal 27 dans la portion des longerons 26 et 44 voisine du pied transversal 27, et qui est verticale lorsque le vélo est monté sur son support, sont montés pivotants, d'une part, deux plaques planes 48 et 49, munies de perçages grâce auxquels les plaques 48 et 49 peuvent être enfilées sur l'arbre 47, et, d'autre part, un manchon 50, enfilé sur l'arbre 47 entre les deux plaques 48 et 49, et dont est solidaire par l'une de ses extrémités, un levier oscillant 51 dont l'autre extrémité porte un patin de freinage 52. Le positionnement des plaques 48 et 49 et du manchon 50 entre les deux longerons 26 et 44 est déterminé par des entretoises 53 et 54, également enfilées sur l'arbre 47 retenu sur les longerons 26 et 44 par des écrous 55 vissés sur les extrémités filetées 56 de l'arbre 47. Sur la partie postérieure des plaques 48 et 49 et entre ces dernières, un galet 57 est monté tourillonnant autour d'un axe 58 parallèle à l'arbre 47, et retenu sur chacune des plaques 48 et 49 par une vis.

Un bras transversal 59, solidaire par l'une de ses extrémités du levier oscillant 51, dans la partie centrale de ce dernier, présente une languette 60, percée d'un orifice traversé par la boucle inférieure 61 d'un crochet 62, dont la bouche supérieure 63 est reliée à la partie inférieure d'un ressort de traction 64, relié, à sa partie supérieure, à un manchon 65 par une goupille 66 dont la partie saillant hors de la fente 67, présentée par un élément tubulaire 68, dans lequel sont logés et peuvent se déplacer le ressort 64 et le manchon 65, constitue un téton indicateur de l'état de tension du ressort 64, venant en regard d'une échelle graduée 69, fixée sur la face externe de l'élément tubulaire 68, pour constituer un indicateur de l'intensité du freinage, c'est-à-dire de l'intensité avec laquelle le patin de freinage 52 est appliqué contre le galet 57 lui-même appliqué contre la roue arrière 6 du vélo. Le système de réglage de la force de freinage est complété par une vis 70 à tête moletée 71, disposée dans l'extrémité de l'élément tubulaire 68 opposée à celle d'où dépasse la boucle inférieure 61 du crochet 62, cette vis 70 coopérant avec un écrou 72 solidaire du manchon 65, de sorte que par la rotation de la tête 71 de la vis 70, l'utilisateur puisse commander les déplacements du manchon 65 dans l'élément tubulaire 68 et faire varier à volonté la traction du ressort 64 sur le levier oscillant 51.

De préférence, l'élément tubulaire 68 est soudé le long de la portion du longeron coudé 26 qui se trouve verticale lorsque le vélo est sur son support, ce qui procure une bonne accessibilité à la tête 71 de la vis de réglage 70.

## Revendications

1. Cadre de bicyclette pour vélo à cadre télescopique, comportant une base centrale, des moyens coopérant avec une extrémité de ladite base centrale pour commander une roue avant (10), des moyens de fixation (4, 5, 14) d'une roue arrière (6) et des moyens de maintien d'un pédalier (16) et d'une selle (23) sur ladite base, caractérisé par le fait que ladite base centrale est constituée par une poutre longitudinale rectiligne (1), décalée par rapport au plan des deux roues et par des moyens de fixation (4, 5, 14) de ladite roue arrière (6) situés latéralement à ladite poutre (1), sensiblement à sa partie postérieure.

2. Cadre selon la revendication 1, caractérisé par le fait que ladite poutre longitudinale (1) est constituée par au moins deux tubes (2, 3) aptes à coulisser l'un dans l'autre.

3. Cadre selon l'une des revendications précédentes, caractérisé par le fait qu'il comprend des moyens de blocage (13) commandables pour immobiliser les deux tubes (2, 3) dans une position déterminée.

4. Cadre selon l'une des revendications précédentes, caractérisé par le fait qu'il comporte une butée pour empêcher le désaccouplement d'un des deux tubes avec l'autre.

5. Cadre selon l'une des revendications précédentes, caractérisé par le fait qu'il comporte un support apte à coopérer avec ladite poutre (1) présentant au moins deux points d'appui (28, 29) au sol de façon que ladite roue arrière (6) ne soit plus en contact avec le sol.

6. Cadre selon la revendication 5, caractérisé par le fait que ledit support comporte une partie femelle pouvant s'emmancher dans ladite poutre longitudinale (1).

7. Cadre selon la revendication 6, caractérisé par le fait que ledit support est constitué d'un longeron coudé (26) s'emmanchant dans ladite extrémité de ladite poutre longitudinale (1), et d'un pied transversal (27) d'appui au sol sensiblement perpendiculaire à la roue arrière (6).

8. Cadre selon la revendication 7, caractérisé par le fait que ledit support comporte un galet (35), un volant d'inertie (34) lié en rotation avec ledit galet (35) lesdits galet (35) et volant (34) étant montés rotatifs sur ledit longeron (26) au moyen d'un élément de réglage en position 37.

9. Cadre selon l'une des revendications 5 à 8, caractérisé par le fait que ledit support comporte des moyens de freinage (39) pour agir sur l'un des éléments constitués par lesdits galet (35) et volant d'inertie (34).

10. Cadre selon l'une des revendications précédentes, caractérisé par le fait que lesdits moyens de fixation d'une roue arrière (6) comprennent un bras (4, 5, 14) fixé latéralement à ladite poutre (1), ledit bras (14) formant avec ladite poutre un espace en forme de fourche dans lequel est apte à se déplacer par rotation la roue arrière.

11. Cadre selon la revendication 7, caractérisé par le fait que le support comprend un deuxième longeron (44) définissant avec le premier longeron (26), un espace dans lequel est apte à se déplacer ladite roue arrière (6).

12. Cadre selon la revendication 11, caractérisé par le fait que les deux longerons (26, 44) sont situés dans un même plan et sont disposés de façon sensiblement parallèle l'un de l'autre.

13. Cadre selon l'une des revendications 11 et 12, caractérisé par le fait que le deuxième longeron (44) comporte des moyens de liaison (45, 46) avec l'axe (5) portant la roue arrière (6).

14. Cadre selon la revendication 13, caractérisé par le fait que les moyens de liaison comportent une patte d'ancrage (45) solidaire du longeron (44), recevant une extrémité de l'axe (5) portant la roue arrière (6).

15. Cadre selon l'une des revendications 11 à 14, caractérisé par le fait que le support comporte un galet (57) monté en rotation autour d'un axe (58) porté par au moins un palier solidaire de l'un des deux longerons (26, 24).

16. Cadre selon la revendication 15, caractérisé par le fait que le palier est constitué de deux plaques longitudinales (48, 49) pivotant autour d'un arbre (47) fixé entre les deux longerons (26, 44).

17. Cadre selon les revendications 11 à 16, caractérisé par le fait que le support comporte des moyens (51, 59, 62, 64, 65, 72, 70) pour freiner ledit galet (57).

18. Cadre selon la revendication 17, caractérisé par le fait que ces moyens comprennent un patin de freinage (52) des moyens élastiques (64) pour exercer une force sur le patin (52).

## Claims

1. A bicycle frame for a telescopic frame bicycle, the frame comprising a central base member, means co-operating with one end of the said central base member for controlling a front wheel (10), means (4, 5, 14) for fixing a back wheel (6), and means for holding a pedal crank (16) and a saddle (23) to the said base member, the frame being characterized by the fact that the said central base member is constituted by a rectilinear longitudinal beam (1) in a plane offset from the plane of the two wheels, and fixing means (4, 5, 14) for the said back wheel (6) being situated to one side of the said beam (1), substantially at its back end.

2. A frame according to claim 1, characterized by the fact that the said longitudinal beam (1) is constituted by at least two tubes (2, 3) suitable for sliding one in the other.

3. A frame according to any one of the preceding claims, characterized by the fact that it includes controllable locking means for locking the two tubes (2, 3) in a determined position.

4. A frame according to any preceding claim, characterized by the fact that it includes a stop for preventing the two tubes from becoming uncoupled from each other.

5. A frame according to any preceding claim, characterized by the fact that it includes a stand suitable for co-operating with the said beam (1) and having at least two bearing points (28, 29) on the ground in such a manner that the said back wheel (6) is no longer in contact with the ground.

6. A frame according to claim 5, characterized by the fact that the said stand includes a female portion fitable to the said longitudinal beam (1).

7. A frame according to claim 6, characterized by the fact that the said stand is constituted by a bent bar (26) fitable to the said end of the said longitudinal bar (1), and by a transverse foot (27) substantially perpendicular to the back wheel for bearing against the ground.

8. A frame according to claim 7, characterized by the fact that the said stand includes a pick-up wheel (35) and a flywheel (34) rotatably linked to the pick-up wheel, the said pick-up wheel and the said flywheel being rotatably mounted on the said bar (26) by position-adjusting means (37).

9. A frame according to any one of claims 5 to 8, characterized by the fact that the said stand includes brake means (39) for acting on one of the elements constituted by the said pick-up wheel (35) and the said flywheel (34).

10. A frame according to any preceding claim, characterized by the fact that the means for fixing a back wheel (6) include an arm (4, 5, 14) fixed to one side of the said beam (1), the said arm (14) forming, together with the said beam, a space in the form of a fork in which the back wheel is capable of rotating.

11. A frame according to claim 7, characterized by the fact that the stand includes a second bar (44) which, together with the first bar (26), defines a space in which the said back wheel (6) can move.

12. A frame according to claim 11, characterized by the fact that the two bars (26, 44) are situated in the same plane and are disposed substantially parallel to each other.

13. A frame according to claim 11 or 12, characterized by the fact that the second bar (44) includes link means (45, 46) linking with the axle (5) of the back wheel (6).

14. A frame according to claim 13, characterized by the fact that the link means include an anchor tab (45) fixed to the bar (44) to receive one end of the axle (5) of the back wheel (6).

15. A frame according to any one of claims 11 to 14, characterized by the fact that the stand includes a pick-up wheel (57) rotatably mounted about an axle (58) mounted in at least one bearing fixed to one of the two bars (26, 44).

16. A frame according to claim 15, characterized by the fact that the bearing is constituted by two longitudinal plates (48, 49) pivoting about a shaft (47) which is fixed between the two bars (26, 44).

17. A frame according to claims 11 to 16, characterized by the fact that the stand includes means (51, 59, 62, 64, 65, 72, 70) for braking the said pick-up wheel (57).

18. A frame according to claim 17, characterized by the fact that these means include a brake shoe (52), and resilient means (64) for exerting a force on the shoe (52).

## Ansprüche

1. Zusammenschiebbarer Fahrradrahmen mit einer Zentralbasis, mit einem Ende der genannten Zentralbasis zusammenwirkenden Mitteln zum Lenken eines Vorderrades (10), Befestigungsmitteln (4, 5, 14) eines Hinterrades (6) und Mitteln zum Halten einer Pedalanordnung (16) sowie eines Sattels (23) auf der Basis, dadurch gekennzeichnet, daß die Zentralbasis von einem geraden Längsträger (1) gebildet ist, der relativ zur Ebene der beiden Räder versetzt ist sowie von Befestigungsmitteln (4, 5, 14) des genannten Hinterrades (6), die seitlich an dem genannten Längsträger (1) im wesentlichen an seinem hinteren Ende angeordnet sind.

2. Rahmen nach Anspruch 1, dadurch gekennzeichnet, daß der genannte Längsträger (1) von mindestens zwei ineinander gleitbeweglichen Rohren (2, 3) gebildet ist.

3. Rahmen nach einem der vorangehenden Ansprüche, dadurch gekennzeichnet, daß er Blockiermittel (13) umfaßt, die steuerbar sind zum Festlegen der beiden Rohre (2, 3) in einer vorgegebenen Position.

4. Rahmen nach einem der vorangehenden Ansprüche, dadurch gekennzeichnet, daß er einen Anschlag aufweist zum Verhindern des vollständigen Lösens der beiden Rohre voneinander.

5. Rahmen nach einem der vorangehenden Ansprüche, dadurch gekennzeichnet, daß er einen Support umfaßt, ausgebildet zum Zusammenwirken mit dem genannten Längsträger (1) und mit mindestens zwei Bodenabstützpunkten (28, 29) derart versehen, daß das genannte Hinterrad (6) nicht mehr in Kontakt mit dem Boden ist.

6. Rahmen nach Anspruch 5, dadurch gekennzeichnet, daß der genannte Support einen Einsteckabschnitt umfaßt, der in den genannten Längsträger (1) einführbar ist.

7. Rahmen nach Anspruch 6, dadurch gekennzeichnet, daß der genannte Support von einem abgewinkelten Holm (26) gebildet ist, der in das genannte Ende des genannten Längsträgers (1) eingefügt ist sowie einem Transversalfuß (27) zur Abstützung auf dem Boden, der im wesentlichen senkrecht zum Hinterrad (6) ist.

8. Rahmen nach Anspruch 7, dadurch gekennzeichnet, daß der Support eine Mitnehmerrolle (35) sowie ein Schwungrad (34) umfaßt, das mit der Mitnehmerrolle (35) drehverbunden ist, wobei die Mitnehmerrolle (35) und das Schwungrad (34) drehbeweglich an dem genannten Holm (26) mittels eines Positionseinstellelementes (37) montiert sind.

9. Rahmen nach einem der Ansprüche 5 bis 8, dadurch gekennzeichnet, daß der genannte Support Bremsmittel (39) umfaßt zum Einwirken auf eines der Elemente, gebildet von der Mitnehmerrolle (35) und dem Schwungrad (34).

10. Rahmen nach einem der vorangehenden Ansprüche, dadurch gekennzeichnet, daß die Befestigungsmittel eines Hinterrades (6) einen seitlich an dem genannten Längsträger (1) befestigten Arm (4, 5, 14) umfassen, welcher Arm (14) mit dem genannten Längsträger einen gabelförmigen Raum bildet, in dem das Hinterrad drehbeweglich angeordnet ist.

11. Rahmen nach Anspruch 7, dadurch gekennzeichnet, daß der Support einen zweiten Holm (44) umfaßt, der mit dem ersten Holm (26) einen Raum begrenzt, in dem sich das Hinterrad (6) bewegen kann.

12. Rahmen nach Anspruch 11, dadurch gekennzeichnet, daß die beiden Holme (26, 44) in ein- und derselben Ebene liegen und derart angeordnet sind, daß sie im wesentlichen parallel zueinander sind.

13. Rahmen nach Anspruch 11 und 12, dadurch gekennzeichnet, daß der zweite Holm (44) Verbindungsmittel (45, 46) mit der das Hinterrad (6) tragenden Achse (5) umfasst.

14. Rahmen nach Anspruch 13, dadurch gekennzeichnet, daß die Befestigungsmittel einen Verankerungsfuß (45) umfassen, verbunden mit dem Holm (44) zur Aufnahme eines Endes der Achse (5), welche das Hinterrad (6) trägt.

15. Rahmen nach einem der Ansprüche 11 bis 14, dadurch gekennzeichnet, daß der Support eine Mitnehmerrolle (57) umfaßt, die drehbeweglich um eine Achse (58) ist, getragen von mindestens einem mit einem der beiden Holme (26, 44) verbundenen Lager.

16. Rahmen nach Anspruch 15, dadurch gekennzeichnet, daß das Lager von zwei Längsplatten (48, 49) gebildet ist, die schwenkbeweglich sind um eine zwischen den beiden Holmen (26, 44) befestigte Welle (47).

17. Rahmen nach den Ansprüchen 11 bis 16, dadurch gekennzeichnet, daß der Support Mittel (51, 59, 62, 64, 65, 72, 70) aufweist zum Bremsen der genannten Mitnehmerrolle (57).

18. Rahmen nach Anspruch 17, dadurch gekennzeichnet, daß diese Mittel einen Bremsschuh (52) umfassen sowie elastische Mittel (64) zum Ausüben einer Kraft auf den Bremsschuh (52).

FIG . 1

FIG . 2

FIG.3

FIG.4

FIG.5

FIG.6

0 024 982

FIG. 7

0 024 982

FIG . 8